# EUROPEAN PATENT SPECIFICATION

(11) **EP 1 768 210 B1**
(45) Date of publication and mention of the grant of the patent: **29.04.2015**
(21) Application number: 06019887.6
(22) Date of filing: 22.09.2006
(51) Int. Cl.: H01M 10/0525, H01M 10/0567, H01M 10/42, H01M 10/0568

(54) **Additives for overcharge protection in electrochemical cells**
Zusatzstoffe zum Überladeschutz in elektrochemischen Zellen
Additifs comme protection contre la surcharge dans les piles electrochimiques

(30) Priority: 26.09.2005 US 720610 P; 14.09.2006 US 520564
(43) Date of publication of application: 28.03.2007
(73) Proprietor: Air Products and Chemicals, Inc., Allentown, PA 18195-1501 (US)
(72) Inventor: Zonghai, Chen, Downers Grove, IL 60516 (US); Khalil, Amine, Downers Grove, IL 60516 (US)
(74) Representative: Kador & Partner

(56) References cited:
- EP-A- 1 587 158
- EP-A- 1 679 760
- EP-A2- 1 513 215
- JP-A- 2006 019 070
- US-A- 6 022 643
- LEE,H.S. ET AL.: "Synthesis of a Series of Fluorinated Boronate compounds and Their Use as Additives in Lithium Battery Electrolytes" J.ELECTROCHEM. SOC., vol. 151, no. 9, 2004, pages A1429-A1435, XP002412004
- LEE,H.S. ET AL.: "The Synthesis of a New Family of Boron-Based Anion Receptors and the Study of their Effect on Ion Pair Dissociation and Conductivity of Lithium Salts in Nonaqueous Solutions" J.ELECTROCHEM. SOC., vol. 145, no. 8, 1998, pages 2813-2818, XP002412305
- MARCINEK M ET AL: "Model composite polymer electrolytes containing triphenylborane" ELECTROCHIMICA ACTA, ELSEVIER SCIENCE PUBLISHERS, BARKING, GB, vol. 50, no. 19, 30 June 2005 (2005-06-30), pages 3934-3941, XP004933870 ISSN: 0013-4686
- MCBREEN J ET AL: "New approaches to the design of polymer and liquid electrolytes for lithium batteries" JOURNAL OF POWER SOURCES, ELSEVIER, AMSTERDAM, NL, vol. 89, no. 2, August 2000 (2000-08), pages 163-167, XP004201946 ISSN: 0378-7753
- BLOMGREN G E: "Liquid electrolytes for lithium and lithium-ion batteries" JOURNAL OF POWER SOURCES, ELSEVIER, AMSTERDAM, NL, vol. 119-121, 1 June 2003 (2003-06-01), pages 326-329, XP004430190 ISSN: 0378-7753

## Description

### BACKGROUND OF THE INVENTION

Primary and secondary batteries comprise one or more electrochemical cells. Many batteries comprise lithium cells, because of lithium's large reduction potential, low molecular weight of elemental lithium, and high power density. For secondary cells, the small size and high mobility of lithium cations allow for the possibility of rapid recharging. These advantages make lithium secondary batteries ideal for portable electronic devices, e.g., cell phones and laptop computers. Recently, larger size lithium batteries are being developed which have application for use in the hybrid electric vehicle market.

In a lithium secondary cell one of most important concerns is safety and, in particular, the safety problem posed by an overcharge situation, i.e., the application of an overvoltage to a fully charged cell. One danger of overcharging lithium cells employing metal oxide cathodes is that oxygen evolution can occur and create explosive mixtures within the cell. Another danger is that the cell can overheat and cause burns.

In the case of a lithium-based secondary cell, which is of the non-aqueous type, two methods have been developed for dealing with overcharge; one method utilizes a chemical reaction and the other method an electronic circuit. The chemical method has typically involved the addition of a redox shuttle additive also referred to as a reversible oxidation/reduction agent, which is reversibly oxidized just above the fully charged cell voltage. Then, the additive migrates across the electrolyte solution in its oxidized state to the anode where it is reduced back to its original state. Electronic circuits typically disable, sometimes permanently, the battery when activated.

The following patents are representative of lithium secondary batteries and electrochemical cells:

US 5,763,119 discloses non-aqueous lithium secondary cells having overcharge protection. In the background of the patent a technique for preventing the overcharge of the cell using a chemical reaction is suggested wherein it is recommended that a reversible redox agent be added to the electrolyte solution. Fe, Ru and Ce complexes are described as having high oxidation-reduction potential and high electrochemical stability and, therefore, use as reversible oxidation/reduction agents for 4 volt-class lithium-ion secondary cells. The solution for preventing overcharge damage in '119 involved the addition of a substituted benzene, e.g., a dimethoxy fluoro or bromo benzene as a redox shuttle in a cell comprised of a metal lithium anode, a lithium cobalt oxide cathode, LiPF₆ electrolyte salt and a mixture of propylene carbonate and dimethyl carbonate.

US 4,201,839 discloses an electrochemical cell based upon alkali metal-containing anodes, solid cathodes, and electrolytes where the electrolytes are closoborane compounds carried in aprotic solvents. Closoboranes employed are of the formula Z₂BₙXₙ and ZCBₘXₘ wherein Z is an alkali metal, C is carbon, R is a radical selected from the group consisting of organic hydrogen and halogen atoms, B is boron, X is one or more substituents from the group consisting of hydrogen and the halogens, m is an integer from 5 to 11, and n is an integer from 6 to 12. Specifically disclosed examples of closoborane electrolytes employed in the electrochemical cells include lithium octabromooctaborate, lithium decachlorodecaborate, lithium dodecachlorododecaborate, and lithium iododecaborate.

US 6,346,351 discloses electrolyte systems for a rechargeable cell of high compatibility towards positive electrode structures based upon a salt and solvent mixture. Lithium tetrafluoroborate and lithium hexafluorophosphate are examples of salts. Examples of solvents include diethyl carbonate, dimethoxyethane, methylformate, and so forth. In the background are disclosed known electrolytes for lithium cells, which include lithium perchlorate, lithium hexafluoroarsenate, lithium trifluoromethylsulfonate, lithium tetrafluoroborate, lithium bromide, and lithium hexafluoroantimonate electrolytes incorporated in solvents.

Journal of the Electrochemical Society, 151 (9) A1429-A1435 (2004) and references therein disclose boronate, borate and borane-based Lewis acids as additives capable of solubilizing LiF and other Li salts which typically have poor solubility in non-aqueous solvent systems, thus rendering these salts lithium ion electrolytes in lithium ion cells.

H. S. Lee, X. Q. Yang, C. L. Xiang and J. Mc Breen, 'The Synthesis of a New Family of Boron-Based Anion Receptors and the Study of Their Effect on Ion Pair Dissociation and Conductivity of Lithium Salts in Nonaqueous Solutions, J. Electrochem. Soc, Vol. 145, 1998, 2813, relates to a new family of anion receptors based on boron compound which can be used in anion receptors in lithium battery electrolytes. This family includes various borane and borate compounds with different fluorinated aryl and fluorinated alkyl groups.
EP-A-1 513 215 relates to an improvement in lithium secondary batteries comprised of a negative electrode, a positive electrode, a separator, and a lithium-based electrolyte carried in an aprotic solvent and to the electrolyte compositions whereby the improvement resides in the use of a lithium salt of the formula: Li₂B₁₂FₓZ₁₂₋ₓ wherein x is greater than or equal to 4 and Z represents H, Cl, and Br.
US-A-6 022 643 discloses fluorinated boron-based compound which act as anion receptors in non-aqueous battery electrolytes. When added to non-aqueous battery electrolytes, the fluorinated boron-based compounds of the invention enhance ionic conductivity and cation transference number of non-aqueous electrolytes. The fluorinated boron-based anion receptors include borane and borate compounds bearing different fluorinated alkyl and aryl groups.
J. McBreen H. S. Lee, X. Q. Yang, X. Sun, 'New approaches to the design of polymer and liquid electrolytes for lithium batteries', Journal of Power Sources 89, 2000, 163 discloses two new families of neutral anion complexing agents, each based on Lewis acid centers. One is based on electron deficient boron sites on borane or borate compound with various fluorinated aryl or alkyl groups. Some of the borane-based anion receptors can promote the dissolution of LiF in several solvents.
US-A-5,849,432 relates to electrolyte solvents for use in liquid or rubbery electrolyte solutions, specifically, it is directed to boron-containing electrolyte solvents and boron-containing electrolyte solutions.

### BRIEF SUMMARY OF THE INVENTION

This invention solves problems associated with conventional electrolytes by providing improved overcharge protection to an electrochemical cell comprising a negative electrode, a positive electrode, and an electrolyte. The present invention is useful for primary and secondary cells, especially those that may be susceptible to damage from overcharging. By "overcharge" or "overcharging" it is meant charging a cell to a potential above the normal fully charged potential of the cell, or charging a cell above 100% state of charge.

One aspect of the instant invention relates to extending the overcharge capacity of cells such as those described in Patent Application No. 11/097,810 by providing an electrochemical cell as claimed in claim 1. Without wishing to be bound by any theory or explanation it is believed that such an electrochemical cell minimizes the effects of irreversible reactions that may occur in certain electrolyte/cells. It is also believed that effective additives are those which can minimize the amount of fluoride formed in the cell on overcharge, and those which are capable of dissolving any fluoride or other resistive salts formed at the electrode surfaces.

### BRIEF DESCRIPTION OF SEVERAL VIEWS OF THE DRAWINGS

Figure 1 is a graph of capacity retention v. cycle number for Reference Examples 1-5.
Figure 2 is a graph of voltage v. time for Reference Example 6.
Figure 3 is a graph of voltage v. time for Reference Example 7.
Figure 4 is a graph of voltage v. time for Example 8.
Figure 5 is a graph of capacity v. cycle number for Reference Examples 2, 6, 7 and Example 8.
Figure 6 is a graph of capacity v. cycle for Example 8.

### DETAILED DESCRIPTION OF THE INVENTION

Patent Application Publication No. US20050064288 A1 discloses the ranges of borate cluster salts useful for electrochemical cells, the useful salts for lithium ion cells and the use of other electrolyte salts with the borate cluster salts to provide stable Solid Electrolyte Interface (SEI) layers in lithium ion cells. U.S. Patent Application No. 11/097,810 discloses classes of borate cluster salts that are useful for providing overcharge protection to electrochemical cells such as lithium ion cells.

While certain salts provide overcharge protection for extended periods of time, in some cases the redox shuttle chemistry is not completely reversible (e.g., that is the borate cluster salts do undergo slow decomposition during the overcharging process). The products of this decomposition reaction can lead to electrically and ionically resistive layers on the electrodes which in turn may lead to a significant decrease in discharge capacity of the cells on long term overcharging. In some cases, an extended overcharge could occur in one or more cells in a series of cells or pack during trickle charging (e.g., trickle charging is defined as the low rate charging of a cell pack to main full pack potential), or during multiple charges of the pack if the cell (or cells) undergoing overcharge has lower capacity than the other cells in the pack.

The instant invention provides an electrochemical cell comprising an electrolyte which allows the borate cluster salts to provide prolonged overcharge protection without substantially contributing to capacity fade of cells (e.g, by capacity fade it is meant loss of electrochemical energy storage capability after overcharging, or on successive charging and discharging of the cell). The electrolyte solution of this invention is in accordance with claim 1 (e.g, as an SEI layer forming additive). Accordingly, the electrochemical cell of the invention comprises a negative electrode, a positive electrode, and an electrolyte, said electrolyte comprising at least one salt that provides overcharge protection, at least one carrier, and at least one additive, wherein the additive comprises at least one Lewis acid, wherein said salt that provides overcharge protection comprises a salt of the formula: MₐQ, where M is an electrochemically stable cation, Q is a borate cluster anion or heteroborate cluster anion, and a is 1 or 2; said Lewis acid is selected from the group consisting of boron-containing acids; and said electrolyte further comprises at least one nonreversibly oxidizable salt which comprises lithium bis(oxalato)borate. The amount of lithium bis-oxalato borate will normally range from about 0.1 to about 5 wt.% of the electrolyte.

The inventive electrolyte can also incorporate a molecular (non-salt) fluorinated tri-substituted borane acid such as tris-(perfluorophenyl) borane (e.g, as an anion receptor which appears to hinder the buildup of resistive films brought about by borate decomposition that can occur during overcharge). Other suitable tri-substituted acids can be selected from the list of borates - boron containing acids in which B is bonded to 3 oxygens, boronates - boron containing acids in which the boron is bound to a mixture of 3 carbons and oxygens, and boranes - boron containing acids in which the boron is bound to 3 carbons. Other soluble, non-HF generating Lewis acids may be effective in extending the life of overcharge protection provided by the borate cluster salt. The acid is used in an electrolyte that also contains lithium bis-oxalato borate. The amount of acid normally ranges from about 0.1 to about 5 wt.% of the electrolyte. The instant invention can increase the length of effective overcharge and hence overcharge capacity can be extended greater than 4 times.

The inventive electrolyte can be produced by combining the electrolyte ingredients in conventional equipment and using conventional methods. In a typical embodiment the electrolyte formula will contain 75-99 wt. % solvent, 1- 20 wt.% salt, 0.1 to 5 wt.% acid and 0.1 to 5 wt.% LiBOB.

The following Examples are provided to illustrate certain aspects of the invention and shall not limit the scope of any claims appended hereto.

### Reference Example 1 (outside the scope of the invention)

A coin type cell battery (diameter 20 mm, thickness 3.2 mm) comprised of a positive electrode, negative electrode, separator and electrolyte was prepared at room temperature. The positive electrode consists of LiMn₂O₄ (positive electrode active material) 84% by weight, carbon black (conducting agent) 4% by weight, SFG-6 graphite (conducting agent) 4% by weight, polyvinylidene fluoride (binder) 8% by weight on an aluminum foil current collector. The negative electrode consists of MCMB(anode active material) 92% by weight, polyvinylidene fluoride (binder) 8% by weight on a copper foil current collector. The separator, Celgard^{™} 3501, (available from Celgard Inc.) comprises the microporous polypropylene film.

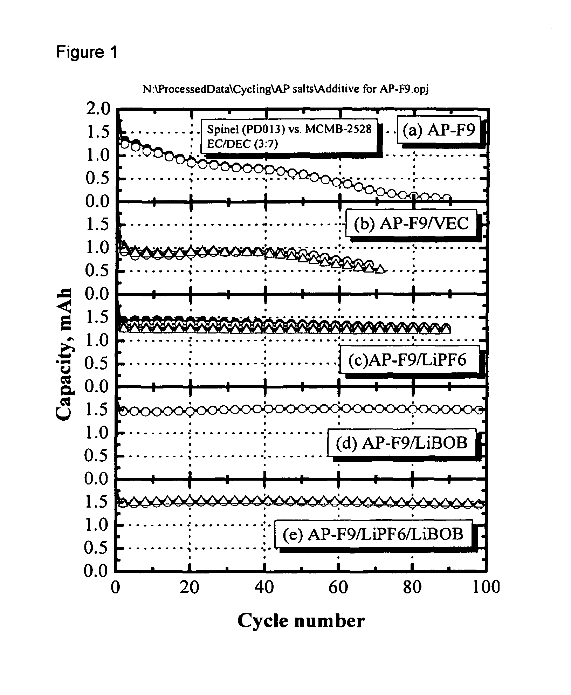

The electrolyte was a 0.4 M solution of Li₂B₁₂F₉H₃ in 3:7 by weight EC:DEC. The cell was charged and discharged multiple times at a C/3-rate constant current between 3.0 and 4.2 V. The capacity retention vs cycle number is shown in Fig. 1a. Rapid capacity fade was observed with complete capacity fade occuring over 80 cycles.

### Reference Example 2 (outside the scope of the invention)

A cell was fabricated and cycled as in Reference Example 1, with the exception that 1% vinylethylene carbonate was added to the electrolyte solution of 0.4 M Li₂B₁₂F₉H₃ in 3:7 by weight EC:DEC to help improve formation of a solid electrolyte interface at the negative electrode. As can be seen in Fig. 1b, capacity retention was improved over example 1; however, greater than 50 % capacity loss was observed over 80 cycles and an initial irreversible capacity loss was also observed.

### Reference Example 3 (outside the scope of the invention)

A cell was fabricated and cycled as in Reference Example 1, with the exception that the electrolyte solution was 0.36 M Li₂B₁₂F₉H₃ and 0.08 M LiPF₆ in 3:7 by weight EC:DEC. The LiPF₆ was added to help improve formation of a solid electrolyte interface at the negative electrode. As can be seen in Fig. 1c, capacity retention was improved over Reference Examples 1 and 2. Capacity fade was observed on cycling.

### Reference Example 4 (outside the scope of the invention)

A cell was fabricated and cycled as in Reference Example 1, with the exception that the electrolyte solution was 0.36 M Li₂B₁₂F₉H₃ and 0.08 M lithium bis-oxalatoborate (LiBOB) in 3:7 by weight EC:DEC. The LiBOB was added (e.g., to improve formation of a solid electrolyte interface at the negative electrode without adding a source of HF as with LiPF₆ addition in Reference Example 3). As can be seen in Fig. 1d, no capacity loss was observed over 100 charge/discharge cycles.

### Reference Example 5 (outside the scope of the invention)

A cell was fabricated and cycled as in Reference Example 1, with the exception that the electrolyte solution was 0.36 M Li₂B₁₂F₉H₃, 0.04 LiBOB and 0.04 M LiPF₆ in 3:7 by weight EC:DEC. As can be seen in Fig. 1e, very slow capacity fade is observed on cycling. This result and those of Reference Examples 3 and 4 indicate that both LiPF₆ and LiBOB are capable of forming stable SEI layers on MCMB with electrolytes containing borate cluster salt, but that LiBOB alone as an additive was better than LiPF₆ alone or in combination with LiPF₆. Without wishing to be bound by any theory or explanation this result may be due to the sensitivity of the LiMn₂O₄ positive electrode in the presence of traces of HF contained in LiPF₆.

### Reference Example 6 (outside the scope of the invention)

### Overcharge Protection with Li₂B₁₂F₉H₃ - based electrolyte

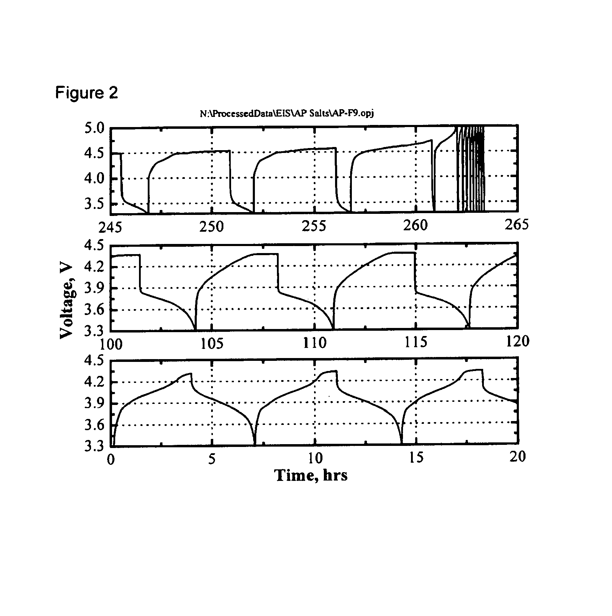

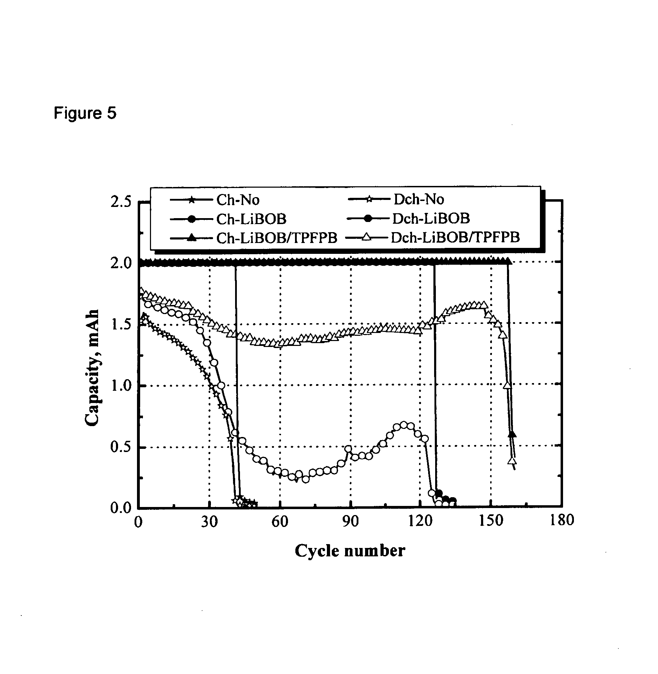

A cell was fabricated as in Reference Example 1 with an electrolyte comprising 0.4 M Li₂B₁₂F₉H₃ in 3:7 by weight EC:DEC. In each charge/discharge cycle, the cell was charged at a C/3 rate for 4 hrs followed by a constant current discharge at C/3 rate to 3.0 V. Such a charging protocol effectively overcharges the cell at to at least 33% above its full charge capacity. The cycle data presented in Figure 2 show that the cell potential is limited to - 4.5 V on overcharge by the use of the Li₂B₁₂F₉H₃ electrolyte and that this overcharge protection lasts for - 40 of the mentioned overcharge/discharge cycles. This electrolyte provides a total of - 260 hrs overcharge protection at this overcharging rate, after which time the cell potential is no longer limited on overcharge. Figure 5 shows the charging capacity and discharge capacity retention on overcharging indicates that this cell rapidly loses 4.2 to 3V discharge capacity and by the time the overcharge protection fails, no capacity remains in the cell.

### Reference Example 7 (outside the scope of the invention)

### Overcharge Protection with Li₂B₁₂F₉H₃ - based electrolyte + LIBOB additive

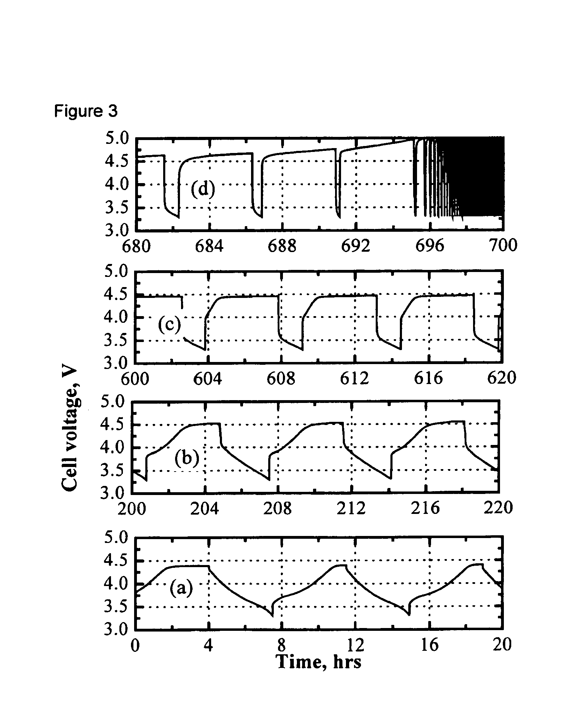

A cell was fabricated as in Reference Example 1 with an electrolyte comprising 0.36 M Li₂B₁₂F₉H₃ and 0.08M lithium *bis*(oxalato)borate (LiBOB) in 3:7 by weight EC:DEC. In each charge/discharge cycle, the cell was charged at a C/3 rate for 4 hrs followed by a constant current discharge at C/3 rate to 3.0 V. Such a charging protocol effectively overcharges the cell at to at least 33% above its full charge capacity. The cycle data presented in Figure 3 show that the cell potential is limited to - 4.5 V on overcharge by the use of the Li₂B₁₂F₉H₃ electrolyte and that this overcharge protection lasts for - 100 of the mentioned overcharge/discharge cycles. This electrolyte formulation provides a total of - 680 hrs overcharge protection at this overcharging rate, after which time the cell potential is no longer limited on overcharge. Figure 5 showing the charging capacity and discharge capacity retention on overcharging indicates that this cell loses 4.2 to 3V discharge capacity at a slower rate than the cell of example 6 and stabilizes at - 30-40% of the full charge capacity between overcharge cycles 40 and 120. At the time the overcharge protection fails, no 4.2V to 3V discharge capacity remains in the cell.

### Example 8

### Overcharge Protection with Li₂B₁₂F₉H₃ - based electrolyte + LIBOB additive + tris(pentafluorophenyl) borane additive

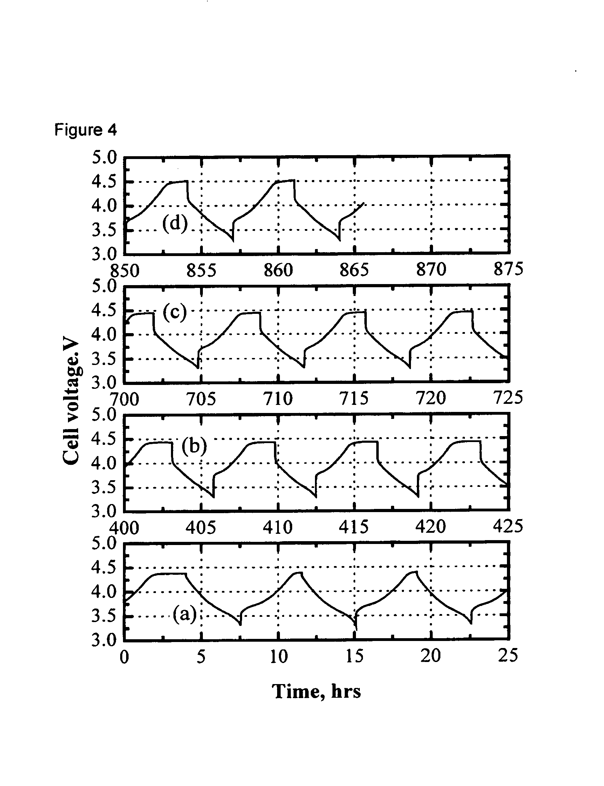

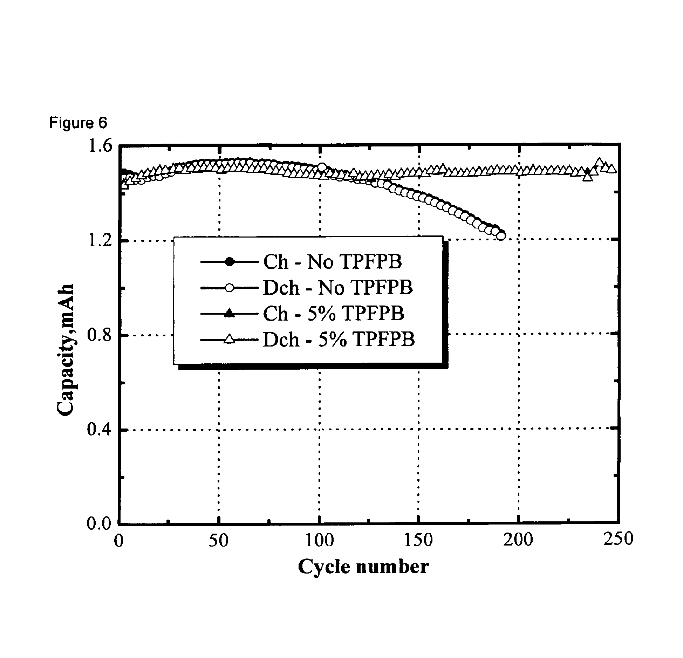

A cell was fabricated as in Reference Example 1 with an electrolyte comprising 0.36 M Li₂B₁₂F₉H₃ and 0.08M lithium *bis*(oxalato)borate (LiBOB) and 5 wt.% tris(pentafluorophenyl) borane in 3:7 by weight EC:DEC. In each charge/discharge cycle, the cell was charged at a C/3 rate for 4 hrs followed by a constant current discharge at C/3 rate to 3.0 V. Such a charging protocol effectively overcharges the cell at to at least 33% above its full charge capacity. The cycle data presented in Figure 4 show that the cell potential is limited to - 4.5 V on overcharge by the use of the Li₂B₁₂F₉H₃ electrolyte and that this overcharge protection is still effective after - 160 of the mentioned overcharge/discharge cycles. This electrolyte formulation was still providing overcharge protection after 865 hrs at this overcharging rate. Figure 5 shows that 4.2 to 3 V discharge capacity retention is quite good even over the 160 overcharge cycles of this test. Figure 6 shows the affect of using 5% TPFPB.

## Claims

1. An electrochemical cell comprising a negative electrode, a positive electrode, and an electrolyte, said electrolyte comprising at least one salt that provides overcharge protection, at least one carrier, and at least one additive, wherein the additive comprises at least one Lewis acid, wherein said salt that provides overcharge protection comprises a salt of the formula:
MₐQ
where M is an electrochemically stable cation, Q is a borate cluster anion or heteroborate cluster anion, and a is 1 or 2; said Lewis acid is selected from the group consisting of boron-containing acids; and said electrolyte further comprises at least one nonreversibly oxidizable salt which comprises lithium bis(oxalato)borate.

2. The cell of Claim 1 wherein M comprises at least one member selected from the group consisting of alkali metal, alkaline earth metal, tetraalkylammonium, and imidazolium.

3. The cell of Claim 1 wherein M comprises lithium.

4. The cell of Claim 1 wherein Q comprises at least one member selected from the group consisting of:
(i) a *closo*-borate anion of the formula (B₈₋₁₂Z₈₋₁₂)²⁻, where Z is F, H, Cl, Br, or (OR), where R is H, alkyl or fluoroalkyl,
(ii) a *closo*-ammonioborate anion compositions of formula: ((R'R"R"')NB₈₋₁₂Z₇₋₁₁)⁻ ; where N is bonded to B and each of R', R", R"' is independently selected from the group consisting of hydrogen, alkyl, cycloalkyl, aryl and/or a polymer, Z is F, H, Cl, Br, or (OR), where R is H, alkyl or fluoroalkyl, and
(iii) a *closo*-monocarborate anion compositions of formula (R""CB₇₋₁₁Z₇₋₁₁)⁻, where R"" is bonded to C and selected from the group consisting of hydrogen, alkyl, cycloalkyl, aryl, and/or a polymer; Z is F, H, Cl, Br, or (OR), where R is H, alkyl or fluoroalkyl.

5. The cell of Claim 4 wherein Q comprises *closo*-borate anion of the formula (B₈₋₁₂Z₈₋₁₂)²⁻, where Z is F, H, Cl, Br, or (OR), where R is H, C1-8 alkyl or fluoroalkyl.

6. The cell of Claim 5 wherein the subscript a is 2.

7. The cell of Claim 6 wherein the salt that provides overcharge protection comprises at least one member selected from the group consisting of Li₂B₁₀H₀₋₇Z₃₋₁₀ where Z is Cl, OR, Li₂B₁₀Cl₁₀, Li₂B₁₀H₁₋₅Cl₅₋₉, Li₂B₁₀Cl₅₋₉(OR)₁₋₅, Li₂B₁₀H₂Cl₈; Li₂B₁₀H₀₋₇(OCH₃)₃, Li₂B₁₀Cl₈(OH)₂, Li₂B₁₀Br₁₀, Li₂B₈Br₈, Li₂B₁₂Cl₁₂, and Li₂B₁₂I₁₂.

8. The cell of claim 1 wherein the acid will not substantially hydrolyze to generate HF.

9. The cell of claim 1 wherein said boron containing acid comprises at least one member selected from the group consisting of boranes, boronates and borates.

10. The cell of claim 1 wherein said boron containing acid is selected from the group consisting of tri-substituted borane acids.

11. The cell of claim 10 wherein said tri-substituted borane acid is selected from the group consisting of fluorinated tri-substituted borane acids.

12. The cell of claim 11 wherein said boron containing Lewis acid comprises tris(pentafluorophenyl) borane.

13. The cell of claim 7, wherein said nonreversible oxidizable salt further comprises at least one member selected from the group consisting of lithium perchlorate, lithium hexafluorophosphate, lithium hexafluoroarsenate, lithium hexafluoroborate, lithium trifluoromethylsulfonate, lithium tetrafluoroborate, lithium tetrakis(pentafluorophenyl)-borate lithium bromide, and lithium hexafluoroantimonate, LiB(C₆H₅)₄, LiN(SO₂CF₃)₂, LiN(SO₂CF₂CF₃) and lithium bis(chelato)borates and mixtures thereof.

14. The cell of Claim 1 wherein the at least one carrier comprises an aprotic organic comprising at least one member selected from the group consisting of dimethyl carbonate, ethyl methyl carbonate, diethyl carbonate, methyl propyl carbonate, ethyl propyl carbonate, dipropyl carbonate, bis(trifluoroethyl) carbonate, bis(pentafluoropropyl) carbonate, trifluoroethyl methyl carbonate, pentafluoroethyl methyl carbonate, heptafluoropropyl methyl carbonate, perfluorobutyl methyl carbonate, trifluoroethyl ethyl carbonate, pentafluoroethyl ethyl carbonate, heptafluoropropyl ethyl carbonate, perfluorobutyl ethyl carbonate, etc., fluorinated oligomers, methyl propionate, butyl propionate, ethyl propionate, sulfolane, 1,2-dimethoxyethane, 1,2-diethoxyethane, tetrahydrofuran, 1,3-dioxolane, 4-methyl-1,3-dioxolane dimethoxyethane, triglyme, dimethylvinylene carbonate, vinylene carbonate, chloroethylene carbonate, tetraethyleneglycol, dimethyl ether, polyethylene glycols, sulfones, and gamma-butyrolactone.

15. The cell of Claim 2 wherein the salt that provides overcharge protection comprises at least one lithium fluoroborate selected from the group consisting of those compounds represented by the formulas:
Li₂B₁₀FₓZ₁₀₋ₓ
and
Li₂B₁₂FₓZ₁₂₋ₓ
wherein x is at least 3 for the decaborate salt and at least 5 for the dodecaborate salt, and Z represents H, Cl, Br, or OR, where R = H, C1-8 alkyl or fluoroalkyl.

16. The cell of Claim 12 wherein the lithium fluoroborate has a reversible oxidation potential from 0.1 to 1 volt above the voltage of the cell.

17. The cell of Claim 1 wherein the lithium fluoroborate salt is added in an amount from about 3 to about 70 % by weight of the total weight of said nonreversibly oxidizable salt and said salt that provides overcharge protection present in the cell.

18. The cell of Claim 13 wherein the salt that provides overcharge protection comprises at least one member selected from the group consisting of Li₂B₁₂F₁₂ Li₂B₁₂FₓH₁₂₋ₓ (X=10, 11 and/or 12), Li₂B₁₂FₓCl₁₂₋ₓ (x=6, 7, 8, 9, 10, 11 and/or 12), Li₂B₁₂Fₓ(OH)₁₂₋ₓ (x=10 and/or 11), L1₂B₁₂F₁₀(OH)₂, Li₂B₁₂F₅H₇ and Li₂B₁₀Cl₁₀.

19. The cell of Claim 15 wherein the carrier comprises at least one member selected from the group consisting of dimethyl carbonate, ethyl methyl carbonate, diethyl carbonate, methyl propyl carbonate, ethyl propyl carbonate, dipropyl carbonate, bis(trifluoroethyl) carbonate, bis(pentafluoropropyl) carbonate, trifluoroethyl methyl carbonate, pentafluoroethyl methyl carbonate, heptafluoropropyl methyl carbonate, perfluorobutyl methyl carbonate, trifluoroethyl ethyl carbonate, pentafluoroethyl ethyl carbonate, heptafluoropropyl ethyl carbonate, perfluorobutyl ethyl carbonate, etc., fluorinated oligomers, methyl propionate, butyl propionate, ethyl propionate, sulfolane, 1,2-dimethoxyethane, 1,2-diethoxyethane, tetrahydrofuran, 1,3-dioxolane, 4-methyl-1,3-dioxolane dimethoxyethane, triglyme, dimethylvinylene carbonate, vinylene carbonate, chloroethylene carbonate tetraethyleneglycol, dimethyl ether, polyethylene glycols, sulfones, and gamma-butyrolactone.

20. An electrochemical cell according to any one of the preceding claims, wherein the electrolyte comprises at least one aprotic organic carrier.

21. The cell of claim 17, wherein said overcharge protection has a reversible oxidation potential from 0.1 to 1 volt above the voltage of the cell to act as a redox shuttle.

22. The cell of Claim 17 wherein the salt that provides overcharge protection comprises a salt represented by the general formula
Li₂B₁₀X₁₀ or
Li₂B₁₂X₁₂
where X = H, F, Cl, Br, or OH.

23. The cell of Claim 13 wherein the salt that provides overcharge protection comprises salt represented by the formula:
Li₂B₁₀F₈₋₁₀Z₀₋₂, or
Li₂B₁₂F₁₀₋₁₂Z₀₋₂
where Z is H or Cl.

## Patentansprüche

1. Elektrochemische Zelle, welche eine negative Elektrode, eine positive Elektrode und ein Elektrolyt umfasst, wobei das Elektrolyt wenigstens ein Salz umfasst, das Überladungsschutz bereitstellt, wenigstens einen Träger und wenigstens ein Additiv, wobei das Additiv wenigstens eine Lewissäure umfasst, wobei das Salz, das Überladungsschutz bereitstellt, ein Salz von der Formel umfasst:
MₐQ
wobei M ein elektrochemisch stabiles Kation ist, Q ein Boratclusteranion oder Heteroboratclusteranion ist und a 1 oder 2 ist; wobei die Lewissäure ausgewählt ist aus der Gruppe bestehend aus borhaltigen Säuren; und das Elektrolyt ferner wenigstens ein nicht reversibel oxidierbares Salz umfasst, welches Lithiumbis(oxolato)borat umfasst.

2. Zelle gemäß Anspruch 1, wobei M wenigstens ein Mitglied ausgewählt aus der Gruppe bestehend aus Alkalimetall, Erdalkalimetall, Tetraalkylammonium und lmidazolium umfasst.

3. Zelle gemäß Anspruch 1, wobei M Lithium umfasst.

4. Zelle gemäß Anspruch 1, wobei Q wenigstens ein Mitglied umfasst ausgewählt aus der Gruppe bestehend aus:
(i) ein closo-Boratanion der Formel (B₈₋₁₂Z₈₋₁₂ )²-, wobei Z F, H, Cl, Br oder (OR) ist, wobei R H ist, Alkyl oder Fluoralkyl,
(ii) closo-Ammoniumboratanionzusammensetzungen der Formel: ((R'R"R"')NB₈₋₁₂Z₇₋₁₁)-; wobei N an B gebunden ist und jedes von R', R", R'" unabhängig ausgewählt ist aus der Gruppe bestehend aus Wasserstoff, Alkyl, Zykloalkyl, Aryl und/oder einem Polymer, Z F, H, Cl, Br oder (OR) ist, wobei R H, Alkyl oder Fluoralkyl ist, und
(iii) closo-Monocarboratzusammensetzungen der Formel (R""CB₇₋₁₁Z₇₋₁₁)⁻, wobei R"" an C gebunden ist und ausgewählt ist aus der Gruppe bestehend aus Wasserstoff, Alkyl, Zykloalkyl, Aryl und/oder einem Polymer; Z F, H, Cl, Br oder (OR) ist, wobei R H, Alkyl oder Fluoralkyl ist.

5. Zelle gemäß Anspruch 4, wobei Q ein closo-Boratanion der Formel (B₈₋₁₂Z₈₋₁₂)²⁻ umfasst, wobei Z F, H, Cl, Br oder (OR) ist, wobei R H, C1-8 Alkyl oder Fluoralkyl ist.

6. Zelle gemäß Anspruch 5, wobei das tiefgestellte a 2 ist.

7. Zelle gemäß Anspruch 6, wobei das Salz, das Überladungsschutz bereitstellt, wenigstens ein Mitglied umfasst, ausgewählt aus der Gruppe bestehend aus Li₂B₁₀H₀₋₇Z₃₋₁₀, wobei Z Cl, OR, Li₂B₁₀Cl₁₀, Li₂B₁₀H₁₋₅Cl₅₋₉, Li₂B₁₀Cl₅₋₉(OR)₁₋₅, Li₂B₁₀H₂Cl₈; Li₂B₁₀H₀₋₇(OCH₃)₃, Li₂B₁₀Cl₈(OH)₂, Li₂B₁₀Br₁₀, Li₂B₈Br₈, Li₂B₁₂Cl₁₂ und Li₂B₁₂I₁₂ ist.

8. Zelle gemäß Anspruch 1, wobei die Säure nicht wesentlich hydrolysiert, um HF zu generieren.

9. Zelle gemäß Anspruch 1, wobei die borenthaltende Säure wenigstens ein Mitglied ausgewählt aus der Gruppe bestehend aus Boranen, Boronaten und Boraten umfasst.

10. Zelle gemäß Anspruch 1, wobei die borenthaltende Säure ausgewählt ist aus der Gruppe bestehend aus tri-substituierten Boransäuren.

11. Zelle gemäß Anspruch 10, wobei die tri-substituierte Boransäure ausgewählt ist aus der Gruppe bestehend aus fluorierten tri-substituierten Boransäuren.

12. Zelle gemäß Anspruch 11, wobei die borenthaltende Lewissäure Tris(pentafluorphenyl)boran umfasst.

13. Zelle gemäß Anspruch 7, wobei das nicht oxidierbare Salz ferner wenigstens ein Mitglied umfasst, ausgewählt aus der Gruppe bestehend aus Lithiumperchlorat, Lithiumhexafluorophosphat, Lithiumhexafluoroarsenat, Lithiumhexafluoroborat, Lithiumtrifluormethylsulfonat, Lithiumtetrafluoroborat, Lithiumtetrakis(pentafluorphenyl)borat, Lithiumbromid und Lithiumhexafluoroantimonat, LiB(C₆H₅)₄, LiN(SO₂CF₃)₂, LiN(SO₂CF₂CF₃) und Lithiumbis(chelato)boraten und Mischungen daraus.

14. Zelle gemäß Anspruch 1, wobei der wenigstens ein Träger eine aprotische organische Verbindung umfasst, welche mindestens ein Mitglied umfasst, ausgewählt aus der Gruppe bestehend aus Dimethylencarbonat, Ethylmethylencarbonat, Diethylencarbonat, Methylpropylencarbonat, Ethylpropylencarbonat, Dipropylencarbonat, Bis(trifluorethylen)carbonat, Bis(pentafluorpropylen)carbonat, Trifluorethylmethylencarbonat, Pentafluorethylmethylencarbonat, Heptafluorpropylmethylencarbonat, Perfluorbutylmethylencarbonat, Trifluorethylethylencarbonat, Pentafluorethylethylencarbonat, Heptafluorpropylethylencarbonat, Perfluorbutylethylencarbonat, etc.,
fluorierte Oligomere, Methylpropionat, Butylpropionat, Ethylpropionat, Sulfolan, 1,2-Dimethoxyethan, 1,2-Diethoxyethan, Tetrahydrofuran, 1,3-Dioxolan, 4-Methyl-1,3-dioxolandiemthoxyethan, Triglym, Dimethylvinylencarbonat, Vinylencarbonat, Chlorethylencarbonat, Tetraethylenglykol, Diemethylether, Polyethylenglykole, Sulfone und gamma-Butyrolacton.

15. Zelle gemäß Anspruch 2, wobei das Salz, das Überladungsschutz bereitstellt, wenigstens ein Lithiumfluoroborat umfasst ausgewählt aus der Gruppe bestehend aus den Verbindungen repräsentiert durch die Formeln:
Li₂B₁₀FₓZ₁₀₋ₓ
und
Li₂B₁₂FₓZ₁₂₋ₓ
wobei x wenigstens 3 für das Decaboratsalz und wenigstens 5 für das Dodecaboratsalz ist und Z H, Cl, Br oder OR repräsentiert, wobei R = H, C1-8 Alkyl oder Fluoralkyl ist.

16. Zelle gemäß Anspruch 12, wobei das Lithiumfluoroborat ein reversibles Oxidationspotenzial von 0,1 bis 1 Volt über der Spannung der Zelle hat.

17. Zelle gemäß Anspruch 1, wobei das Lithiumfluoroboratsalz in einer Menge von etwa 3 bis etwa 70 Gewichtsprozent von dem Gesamtgewicht von dem nicht reversibel oxidierbaren Salz und dem Salz, das Überladungsschutz bereitstellt, welche in der Zelle anwesend sind, hinzugefügt wird.

18. Zelle gemäß Anspruch 13, wobei das Salz, das Überladungsschutz bereitstellt, wenigstens ein Mitglied umfasst ausgewählt aus der Gruppe bestehend aus Li₂B₁₂F₁₂, Li₂B₁₂FₓH₁₂₋ₓ (x = 10, 11 und/oder 12), Li₂B₁₂FₓCl₁₂₋ₓ (x = 6, 7, 8, 9, 10, 11 und/oder 12), Li₂B₁₂Fₓ(OH)₁₂₋ₓ (x = 10 und/oder 11), Li₂B₁₂F₁₀(OH)₂, Li₂B₁₂F₅H₇ und Li₂B₁₀Cl₁₀.

19. Zelle gemäß Anspruch 15, wobei der Träger wenigstens ein Mitglied umfasst, ausgewählt aus der Gruppe bestehend aus Dimethylencarbonat, Ethylmethylencarbonat, Diethylencarbonat, Methylpropylencarbonat, Ethylpropylencarbonat, Dipropylencarbonat, Bis(trifluorethylen)carbonat, Bis(pentafluorpropylen)carbonat, Trifluorethylmethylencarbonat, Pentafluorethylmethylencarbonat, Heptafluorpropylmethylencarbonat, Perfluorbutylmethylencarbonat,
Trifluorethylethylencarbonat, Pentafluorethylethylencarbonat, Heptafluorpropylethylencarbonat, Perfluorbutylethylencarbonat, etc., fluorierte Oligomere, Methylpropionat, Butylpropionat, Ethylpropionat, Sulfolan, 1,2-Dimethoxyethan, 1,2-Diethoxyethan, Tetrahydrofuran, 1,3-Dioxolan, 4-Methyl-1,3-dioxolandiemthoxyethan, Triglym, Dimethylvinylencarbonat, Vinylencarbonat, Chlorethylencarbonat, Tetraethylenglykol, Diemethylether, Polyethylenglykole, Sulfone und gamma-Butyrolacton.

20. Elektrochemische Zelle gemäß einem der vorangehenden Ansprüche, wobei das Elektrolyt wenigstens einen aprotischen organischen Träger umfasst.

21. Zelle gemäß Anspruch 17, wobei der Überladungsschutz ein reversibles Oxidationspotenzial von 0,1 bis 1 V über der Spannung der Zelle hat, um als ein Redoxshuttle zu agieren.

22. Zelle gemäß Anspruch 17, wobei das Salz, das Überladungsschutz bereitstellt, ein Salz umfasst, welches durch die allgemeine Formel
Li₂B₁₀X₁₀ oder
Li₂B₁₂X₁₂
repräsentiert wird, wobei X = H, F, Cl, Br oder OH.

23. Zelle gemäß Anspruch 13, wobei das Salz, das Überladungsschutz bereitstellt, Salz umfasst, welches durch die Formel repräsentiert wird:
Li₂B₁₀F₈₋₁₀Z₀₋₂ oder
Li₂B₁₂F₁₀₋₁₂Z₀₋₂
wobei Z H oder CL ist.

## Revendications

1. Cellule électrochimique comprenant une électrode négative, une électrode positive et un électrolyte, ledit électrolyte comprenant au moins un sel qui fournit une protection contre la surcharge, au moins un support et au moins un additif, l'additif comprenant au moins un acide de Lewis, dans laquelle ledit sel qui fournit une protection contre une surcharge comprend un sel de formule :
MₐQ
dans laquelle M est un cation électrochimiquement stable, Q est un anion de groupements borate ou un anion de groupements hétéroborate, et a vaut 1 ou 2 ; ledit acide de Lewis est choisi dans le groupe constitué par les acides contenant du bore ; et ledit électrolyte comprend en outre au moins un sel oxydable de manière non réversible qui comprend le bis(oxalato)borate de lithium.

2. Cellule selon la revendication 1, dans laquelle M comprend au moins un élément choisi dans le groupe constitué par un métal alcalin, un métal alcalino-terreux, un tétraalkylammonium et un imidazolium.

3. Cellule selon la revendication 1, dans laquelle M comprend du lithium.

4. Cellule selon la revendication 1, dans laquelle Q comprend au moins un élément choisi dans le groupe constitué par :
(i) un anion closo-borate de formule (B₈₋₁₂Z₈₋₁₂)²⁻ où Z est F, H, CI, Br ou (OR) où R est H, un groupe alkyle ou fluoroalkyle,
(ii) une composition d'anion closo-ammonioborate de formule : ((R'R"R'")NB₈₋₁₂Z₇₋₁₁)⁻; où N est lié à B et chacun de R', R", R"' est indépendamment choisi dans le groupe constitué par un atome d'hydrogène, un groupe alkyle, un groupe cycloalkyle, un groupe aryle et/ou un polymère, Z est F, H, Cl, Br ou (OR), où R est H, un groupe alkyle ou un groupe fluoroalkyle, et
(iii) une composition d'anion closo-monocarborate de formule (R""CB₇₋₁₁Z₇₋₁₁)⁻ où R"" est lié à C et est choisi dans le groupe constitué par un atome d'hydrogène, un groupe alkyle, un groupe cycloalkyle, un groupe aryle et/ou un polymère ; Z est F, H, CI, Br ou (OR) où R est H, un groupe alkyle ou un groupe fluoroalkyle.

5. Cellule selon la revendication 4, dans laquelle Q comprend un anion closo-borate de formule (B₈₋₁₂Z₈₋₁₂)²⁻ où Z est F, H, CI, Br ou (OR) où R est H, un groupe alkyle en C₁ à C₈ ou un groupe fluoroalkyle.

6. Cellule selon la revendication 5, dans laquelle l'indice a est 2.

7. Cellule selon la revendication 6, dans laquelle le sel qui fournit une protection contre une surcharge comprend au moins un élément choisi dans le groupe constitué par Li₂B₁₀H₀₋₇Z₃₋₁₀ où Z est Cl, OR, L₁₂B₁₀Cl₁₀, Li₂B₁₀H₁₋₅Cl₅₋₉, Li₂B₁₀Cl₅₋₉(OR)₁₋₅, Li₂B₁₀H₂Cl₈, Li₂B₁₀H₀₋₇(OCH₃)₃, Li₂B₁₀Cl₈(OH)₂, Li₂B₁₀Br₁₀, Li₂B₈Br₈, Li₂B₁₂Cl₁₂ et Li₂B₁₂I₁₂.

8. Cellule selon la revendication 1, dans laquelle l'acide ne va sensiblement pas s'hydrolyser pour produire de l'HF.

9. Cellule selon la revendication 1, dans laquelle ledit acide contenant du bore comprend au moins un élément choisi dans le groupe constitué par les boranes, les boronates et les borates.

10. Cellule selon la revendication 1, dans laquelle ledit acide contenant du bore est choisi dans le groupe constitué par les acides de borane trisubstitués.

11. Cellule selon la revendication 10, dans laquelle ledit acide de borane trisubstitué est choisi dans le groupe constitué par les acides de borane trisubstitués fluorés.

12. Cellule selon la revendication 11, dans laquelle ledit acide de Lewis contenant du bore comprend du tris(pentafluorophényl)borane.

13. Cellule selon la revendication 7, dans laquelle ledit sel oxydable de manière non réversible comprend en outre au moins un élément choisi dans le groupe constitué par le perchlorate de lithium, l'hexafluorophosphate de lithium, l'hexafluoroarsenate de lithium, l'hexafluoroborate de lithium, le trifluorométhylsulfonate de lithium, le tétrafluoroborate de lithium, le tétrakis(pentafluorophényl)borate de lithium, le bromure de lithium et l'hexafluoroantimonate de lithium, LiB(C₆H₅)₄, LiN(SO₂CF₃)₂, LiN(SO₂CF₂CF₃) et les bis(chélato)borates de lithium et leurs mélanges.

14. Cellule selon la revendication 1, dans laquelle l'au moins un support comprend un composé organique aprotique comprenant au moins un élément choisi dans le groupe constitué par le carbonate de diméthyle, le carbonate d'éthylméthyle, le carbonate de diéthyle, le carbonate de méthylpropyle, le carbonate d'éthylpropyle, le carbonate de dipropyle, le carbonate de bis(trifluoroéthyle), le carbonate de bis(pentafluoropropyle), le carbonate de trifluoroéthylméthyle, le carbonate de pentafluoroéthylméthyle, le carbonate d'heptafluoropropylméthyle, le carbonate de perfluorobutylméthyle, le carbonate de trifluoroéthyléthyle, le carbonate de pentafluoroéthyléthyle, le carbonate d'heptafluoropropyléthyle, le carbonate de perfluorobutyléthyle, etc., les oligomères fluorés, le propionate de méthyle, le propionate de butyle, le propionate d'éthyle, le sulfolane, le 1,2-diméthoxyéthane, le 1,2-diéthoxyéthane, le tétrahydrofurane, le 1,3-dioxolane, le 4-méthyl-1,3-dioxolane, le diméthoxyéthane, le triglyme, le carbonate de diméthylvinylène, le carbonate de vinylène, le carbonate de chloroéthylène, le tétraéthylène glycol, l'éther diméthylique, les polyéthylène glycols, les sulfones et la gamma-butyrolactone.

15. Cellule selon la revendication 2, dans laquelle le sel qui fournit une protection contre une surcharge comprend au moins un fluoroborate de lithium choisi dans le groupe constitué par les composés représentés par les formules :
Li₂B₁₀FₓZ₁₀₋ₓ
et
Li₂B₁₂FₓZ₁₂₋ₓ
dans lesquelles x est au moins 3 pour le sel de décaborate et au moins 5 pour le sel de dodécaborate et Z représente H, CI, Br ou OR où R = H, un groupe alkyle en C₁ à C₈ ou fluoroalkyle.

16. Cellule selon la revendication 12, dans laquelle le fluoroborate de lithium a un potentiel d'oxydation réversible de 0,1 à 1 volt au-dessus de la tension de la cellule.

17. Cellule selon la revendication 1, dans laquelle le sel de fluoroborate de lithium est ajouté en une quantité allant d'environ 3 à environ 70 % en poids du poids total dudit sel oxydable de manière non réversible et dudit sel qui fournit une protection contre une surcharge présent dans la cellule.

18. Cellule selon la revendication 13, dans laquelle le sel qui fournit une protection contre une surcharge comprend au moins un élément choisi dans le groupe constitué par Li₂B₁₂F₁₂, Li₂B₁₂FₓH₁₂₋ₓ (x = 10, 11 et/ou 12), Li₂B₁₂FₓCl₁₂₋ₓ (x = 6, 7, 8, 9, 10, 11 et/ou 12), Li₂B₁₂Fₓ(OH)₁₂₋ₓ (x = 10 et/ou 11), Li₂B₁₂F₁₀(OH)₂, Li₂B₁₂F₅H₇ et Li₂B₁₀Cl₁₀.

19. Cellule selon la revendication 15, dans laquelle le support comprend au moins un élément choisi dans le groupe constitué par le carbonate de diméthyle, le carbonate d'éthylméthyle, le carbonate de diéthyle, le carbonate de méthylpropyle, le carbonate d'éthylpropyle, le carbonate de dipropyle, le carbonate de bis(trifluoroéthyle), le carbonate de bis(pentafluoropropyle), le carbonate de trifluoroéthylméthyle, le carbonate de pentafluoroéthylméthyle, le carbonate d'heptafluoropropylméthyle, le carbonate de perfluorobutylméthyle, le carbonate de trifluoroéthyléthyle, le carbonate de pentafluoroéthyléthyle, le carbonate d'heptafluoropropyléthyle, le carbonate de perfluorobutyléthyle, etc., les oligomères fluorés, le propionate de méthyle, le propionate de butyle, le propionate d'éthyle, le sulfolane, le 1,2-diméthoxyéthane, le 1,2-diéthoxyéthane, le tétrahydrofurane, le 1,3-dioxolane, le 4-méthyl-1,3-dioxolane, le diméthoxyéthane, le triglyme, le carbonate de diméthylvinylène, le carbonate de vinylène, le carbonate de chloroéthylène, le tétraéthylène glycol, l'éther diméthylique, les polyéthylène glycols, les sulfones et la gamma-butyrolactone.

20. Cellule électrochimique selon l'une quelconque des revendications précédentes, dans laquelle l'électrolyte comprend au moins un support organique aprotique.

21. Cellule selon la revendication 17, dans laquelle ladite protection contre une surcharge a un potentiel d'oxydation réversible de 0,1 à 1 volt au-dessus de la tension de la cellule afin d'agir comme une navette redox.

22. Cellule selon la revendication 17, dans laquelle le sel qui fournit une protection contre une surcharge comprend un sel représenté par la formule générale
Li₂B₁₀X₁₀ ou
Li₂B₁₂X₁₂
où X = H, F, Cl, Br ou OH.

23. Cellule selon la revendication 13, dans laquelle le sel qui fournit une protection contre une surcharge comprend un sel représenté par la formule générale
Li₂B₁₀F₈₋₁₀Z₀₋₂ ou
Li₂B₁₂F₁₀₋₁₂Z₀₋₂
où Z = H ou Cl.
